# EUROPEAN PATENT APPLICATION

(11) **EP 4 759 461 A1**
(43) Date of publication of application: **17.06.2026**
(21) Application number: 24851375.6
(22) Date of filing: 05.06.2024
(51) Int. Cl.: B22D 17/18, B22D 17/22, B22D 17/32, B29C 45/13, B29C 45/76

(54) **INJECTION MOLDING MACHINE AND METHOD FOR MANUFACTURING MOLDED ARTICLE USING INJECTION MOLDING MACHINE**

(30) Priority: 10.08.2023 JP 2023130748
(71) Applicant: The Japan Steel Works, Ltd., Tokyo 141-0032 (JP)
(72) Inventor: YAMAGUCHI, Takeshi, Tokyo 141-0032 (JP); BUTANI, Michio, Tokyo 141-0032 (JP); KAWABE, Chikara, Tokyo 141-0032 (JP); IIDA, Hiroyuki, Tokyo 141-0032 (JP); MATSUZAKI, Takahide, Tokyo 141-0032 (JP)
(74) Representative: Simmons & Simmons LLP (Munich)
(86) International application number: PCT/JP2024/020466
(87) International publication number: WO 2025/032941

(57) **Abstract**

Provided is an injection molding machine capable of manufacturing a metal composite molded article in which a plurality of molded articles are joined transversely to an injection direction. The injection molding machine comprises a plurality of injection devices 3A, 3B, one mold clamping device, and a control device of the plurality of injection devices 3A, 3B. The control device controls the plurality of injection devices 3A, 3B so that the injection steps S3 of all the injection devices 3A, 3B at least partially overlap under mutually different injection conditions.

## Description

### Technical Field

This application claims the benefit of Japanese Priority Patent Application No. 2023-130748 filed on August 10, 2023, the entire contents of which are incorporated herein by reference.

The present invention relates to an injection molding machine and a method for manufacturing molded products using the injection molding machine.

### Background Art

An injection molding machine that comprises a plurality of injection units is known. JP2008-119848 describes an injection molding machine that manufactures a composite molded product by two-color molding. This injection molding machine comprises a fixed platen, a movable platen, a rotary table supported by the movable platen, and two injection units. Two fixed dies can be mounted on the fixed die, and two movable dies can be mounted on the rotary table. When injection by one injection unit is finished, injection by the other injection unit is carried out.

### Summary of Invention

The injection molding machine described in JP2008-119848 is used for two-color molding, and a composite molded product therefore has a structure in which two layers are stacked in the direction of injection. However, a composite molded product in which two molded products are joined in a direction transverse to the direction of injection cannot be manufactured using this type of injection molding machine. The object of the present disclosure is to provide an injection molding machine capable of manufacturing a composite molded product in which multiple molded products are joined transverse to the direction of injection.

The injection molding machine of the present disclosure comprises a plurality of injection units and a control unit for the plurality of injection units. The control unit controls the plurality of injection units according to injection conditions that differ from each other and effects control such that injection processes of all the injection units overlap at least partially.

According to the present disclosure, an injection molding machine can be provided that is capable of manufacturing a composite molded product in which multiple molded products are joined transversely to the direction of injection.

The objects, features, and advantages of the present application, above and otherwise, will become apparent from the detailed description set forth below with reference to the accompanying drawings that illustrate the present application.

### Brief Description of the Drawings

Fig. 1 is a top view of an injection molding machine according to an embodiment of the present invention;
Fig. 2 is a partial front view of the injection molding machine shown in Fig. 1;
Fig. 3 is a perspective view showing an example of a composite molded product;
Fig. 4 is a schematic process diagram of the molding cycle in the injection molding machine shown in Fig. 1;
Fig. 5 is a diagram showing the state inside a mold for the composite molded product shown in Fig. 3; and
Fig. 6 is a schematic view showing various molded products and injection conditions for each of the products.

### Detailed Description of Embodiments

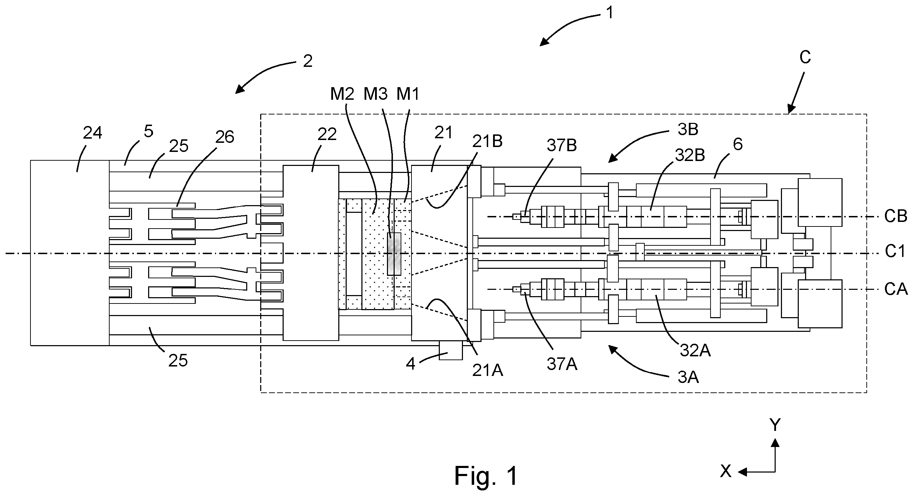

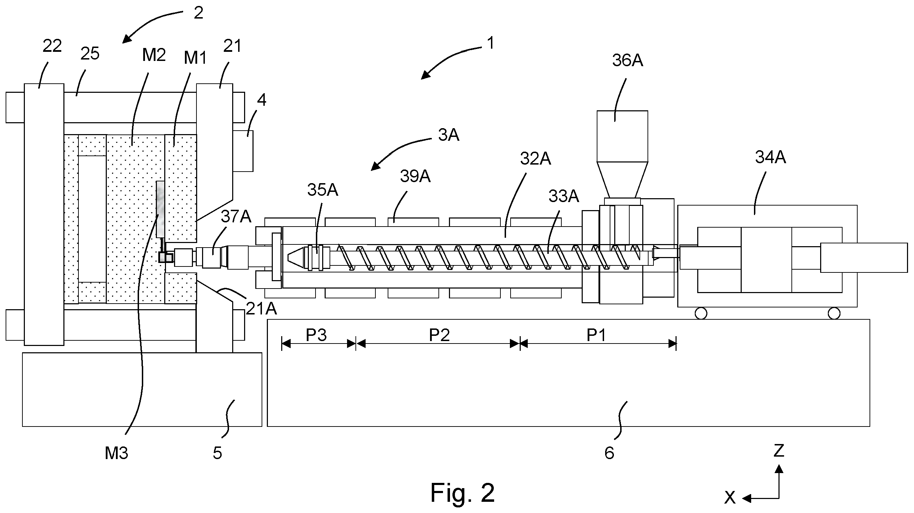

Injection molding machine 1 according to embodiments of the present invention is next described with reference to the drawings. Fig. 1 shows a schematic top view of injection molding machine 1, and Fig. 2 shows a partial front view of area C in Fig. 1. In the following description, the axial direction or movement direction of the screw is referred to as the X-direction, the direction in which the two injection units are aligned is referred to as the Y-direction, and the vertical direction is referred to as the Z-direction. The X-direction and the Y-direction are in a horizontal plane and are orthogonal to each other. Terms such as "frontward" or "front" refer to a movement, direction, or position of the screw that approaches the mold-clamping unit in the X-direction, and terms such as "rearward" or "rear" refer to a movement, direction, or position of the screw away from the mold-clamping unit in the X-direction. The direction in which the metal material is injected is referred to as the injection direction.

### Overall Configuration

Injection molding machine 1 is a horizontal metal injection molding machine. Injection molding machine 1 generally comprises mold-clamping unit 2 that clamps a mold, a plurality of (in the present embodiment, two) injection units 3A and 3B that heat, melt, and inject the metal material to be injected, and control unit 4. Control unit 4 controls mold-clamping unit 2 and the plurality of injection units 3A and 3B. Only one mold-clamping unit 2 and one control unit 4 are provided, and these elements are shared by the plurality of injection units 3A and 3B. The metal material that is heated and melted for injection may be referred to as a molten metal. The metal material may be injected in a semi-molten state or in a fully molten state. The metal to be injected is typically a light metal such as a magnesium alloy or an aluminum alloy, but the type of metal is not limited. The present disclosure is not limited to a metal injection molding machine but may also be applied to a resin injection molding machine.

### Mold-Clamping Unit 2

Mold-clamping unit 2 comprises fixed platen 21, which is fixed to bed 5 and on which fixed mold M1 is mounted, and movable platen 22 on which movable mold M2 is mounted. As shown in Fig. 1, fixed platen 21 is provided with two openings 21A and 21B to receive injection nozzles 37A and 37B at positions that confront injection nozzles 37A and 37B of two injection units 3A and 3B. Cavity M3 into which the molten metal is injected is formed between fixed mold M1 and movable mold M2.

As shown in Fig. 1, mold-clamping housing 24 that can slide on bed 5 is provided on the opposite side of movable platen 22 from fixed platen 21. Fixed platen 21 and mold-clamping housing 24 are connected by a plurality of tie bars 25. Movable platen 22 can slide on bed 5 between fixed platen 21 and mold-clamping housing 24. Toggle-type mold-clamping mechanism 26 that is driven by an electric ball screw is provided between movable platen 22 and mold-clamping housing 24. A hydraulic clamping cylinder may be provided instead of toggle-type mold-clamping mechanism 26.

### Injection Units 3A and 3B

Two injection units 3A and 3B are provided on a common base 6. As shown in Fig. 1, two injection units 3A and 3B are arranged symmetrically with respect to center line C1 of injection molding machine 1. Center line CA of cylinder 32A and center line CB of cylinder 32B of two injection units 3A and 3B are therefore parallel to each other. The width of each injection unit 3A and 3B is small, whereby the width of injection molding machine 1 is also small and increase of the installation area is suppressed.

Two injection units 3A and 3B have the same configuration, and description here therefore focuses on injection unit 3A. In the drawings, the parts of injection units 3A and 3B are distinguished by subscripts A and B, respectively. Parts indicated by the same numbers (e.g., cylinders 32A and 32B) have the same structure unless otherwise noted. In other words, among the parts of injection unit 3B, parts that are not described or are not shown (for example, the screw of injection unit 3B) have the same structure as the corresponding parts of injection unit 3A (for example, screw 33A of injection unit 3A) unless otherwise noted.

As shown in Fig. 2, injection unit 3A comprises hollow cylindrical cylinder 32A and screw 33A that is housed inside cylinder 32A. Screw 33A includes screw head 35A at the front end in the X-direction. A cross section of the internal space of cylinder 32A orthogonal to the X-direction is circular. Injection unit 3A further comprises drive mechanism 34A that is controlled by control unit 4 for driving screw 33A. Screw 33A is rotated and driven in the X-direction (moved frontward and rearward) by drive mechanism 34A.

As shown in Fig. 2, cylinder 32A is generally divided from rear to front into supply section P1, compression section P2, and measurement section P3. Supply section P1 is provided with hopper 36 that is supplied with metal material in the form of pellets. The metal material is compressed, heated, and kneaded in compression section P2 to enter a molten state and is then transferred to measurement section P3. Measurement section P3 measures the amount of molten metal to be injected in one injection cycle (shot). Heaters 39A are provided around the circumference of cylinder 32A to heat the metal material. Injection nozzle 37A is attached to the tip of cylinder 32A to supply molten metal into cavity M3.

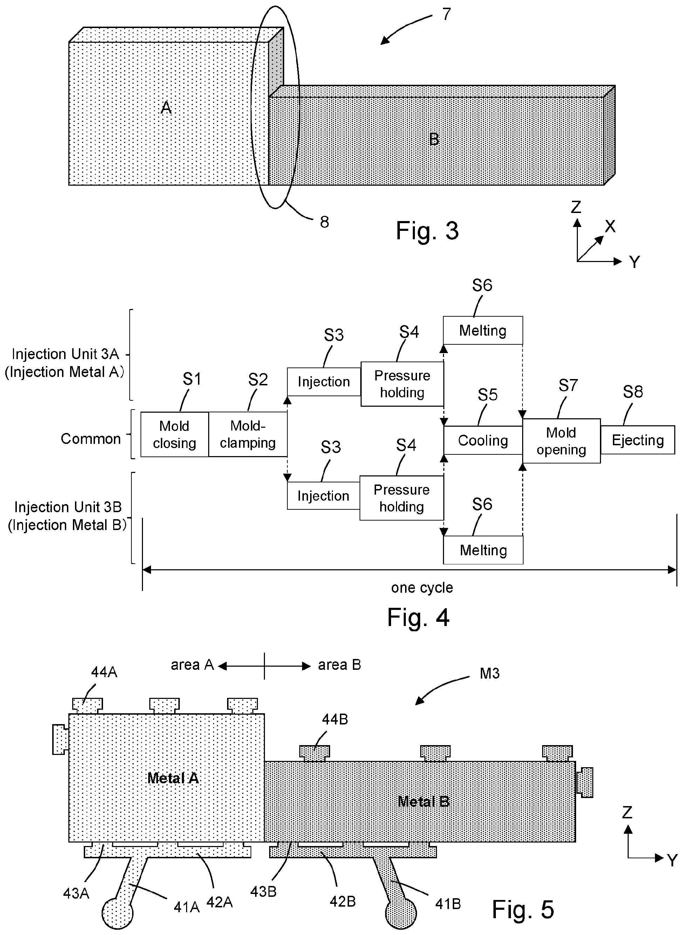

Injection molding machine 1 of the present embodiment can inject different metal materials from each of the two injection units 3A and 3B to manufacture a metal composite molded product in which different metals are joined. Recent years have seen increasing popularity of multi-material design that aims to reduce weight and improve functionality by using multiple metal materials in appropriate places to take advantage of their respective characteristics. Fig. 3 shows an example of such a metal composite molded product and schematically illustrates metal composite molded product 7 used for an automobile instrument panel.

The metal composite molded product 7 consists of part A, which corresponds to the center console section, and part B, which corresponds to the instrument panel section on the driver's side. Part A requires relatively high strength and rigidity and is therefore made of AZ91D magnesium alloy containing 9% aluminum. Part B is made of AM60B magnesium alloy that contains 6% aluminum and that is relatively ductile to absorb impacts during a collision.

In a conventional method of manufacturing metal composite molded product 7 shown in Fig 3, parts A and B are separately manufactured and then integrated by, for example, a mechanical fastening means (such as rivets or screws), welding (such as fusion welding or solid-state stir welding), or adhesion. However, these methods require joining and bonding processes and are subject to shape restrictions. Injection molding machine 1 of the present embodiment not only simplifies the manufacturing process of metal composite molded product 7 but also contributes to lighter weight and higher functionality of metal composite molded product 7 because the optimal material can be used according to the requirements of each part. Appropriate design of the mold also allows an increase in the degree of freedom in the shape of metal composite molded product 7.

The processes of one cycle of injection molding machine 1 are next described with reference to Fig. 4. In the following description of the processes of one cycle of injection molding machine 1, reference is made to Figs. 1 and 2 as appropriate. First, activation of mold-clamping unit 2 by control unit 4 causes the mold to be closed (mold closing process S1). Specifically, a clamping motor (not shown) drives an electric ball screw to extend the toggle-type mold-clamping mechanism 26, whereby movable platen 22 is caused to slide toward fixed platen 21. Once movable platen M2 contacts fixed platen M1, the toggle-type mold-clamping mechanism 26 is stopped, following which the toggle-type mold-clamping mechanism 26 is again activated to bring movable platen M2 into close contact with fixed platen M1 (mold-clamping process S2). This process forms cavity M3 between movable platen M2 and fixed platen M1.

Fig. 5 schematically shows the interior of a mold in which metal composite molded product 7 shown in Fig. 3 is manufactured. In the following description, the molten metal forming part A in Fig. 3 may be referred to as metal A, the molten metal forming part B as metal B, the area in cavity M3 corresponding to part A as area A, and the area in cavity M3 corresponding to part B as area B. Sprues 41A and 41B, runners 42A and 42B, and gates 43A and 43B are provided at the bottom of the mold, and cavity M3 is filled with the molten metal from the bottom upward into areas A and B.

Referring again to Fig. 4, following mold-clamping process S2, cavity M3 of the mold is filled with molten metal (metal A and metal B) from injection units 3A and 3B (injection process S3). Control unit 4 operates the two injection units 3A and 3B simultaneously so that the molten metal begins to fill cavity M3 from two injection units 3A and 3B at approximately the same timing.

Metal A is supplied from cylinder 32A shown in Fig. 2 to injection nozzle 37A and further is injected into area A in cavity M3 from gate 43A by way of sprue 41A and runner 42A in cavity M3 shown in Fig. 5. Similarly, metal B is supplied from cylinder 32B shown in Fig. 2 to injection nozzle 37B and is injected into area B in cavity M3 from gate 43B by way of sprue 41B and runner 42B in cavity M3 shown in Fig. 5. In this way, metal composite molded product 7 can be manufactured in which multiple molded products are joined in the transverse direction (Y-direction) relative to injection direction X. The molten metal that is initially injected into cavity M3 suffers a loss in purity due to reaction with the mold release agent previously applied to the mold surface and reaction with the air in cavity M3 and is therefore discharged into overflow portions 44A and 44B. The injection conditions of injection units 3A and 3B are next described below.

Referring again to Fig. 4, after injection process S3 is finished, the position of screw 33A is maintained to continue applying pressure to cavity M3 of the mold (pressure holding process S4). Metal often shrinks as it solidifies, and execution of pressure holding process S4 causes the injection of additional molten metal that is equivalent to the amount of shrinkage and thus can suppress the occurrence of sink marks. After pressure holding process S4, the molten metal in cavity M3 is cooled and thus solidifies (cooling process S5). During cooling process S5, screw 33A retracts, and metal material for the next cycle is compressed, heated, and kneaded (melting process S6). In injection unit 3B, pressure holding process S4 and melting process S6 are executed in the same manner.

Control unit 4 then causes the toggle type mold-clamping mechanism 26 to flex and thus release movable mold M2 from fixed mold M1 (mold opening process S7). An ejector (not shown) is then used to separate metal composite molded product 7 from movable mold M2 (ejecting process S8), a robot is used to remove metal composite molded product 7, and unnecessary parts such as runners 42A and 42B, gates 43A and 43B and overflow portions 44A and 44B are cut by a press. By means of the processes described above, the metal composite molded product 7 is completed.

Metal A and metal B flow into cavity M3 in a molten state and contact each other whereby a mixture of the two metals is formed in boundary area 8 between metals A and B (see Fig. 3). For example, in the case of magnesium alloy AZ91D and magnesium alloy AM60B, the metal in boundary area 8 contains about 7 to 8% aluminum and has properties intermediate between the two metals. The properties and microstructure of the metal formed in boundary area 8 depend on the combination of metals injected from the two injection units 3A and 3B.

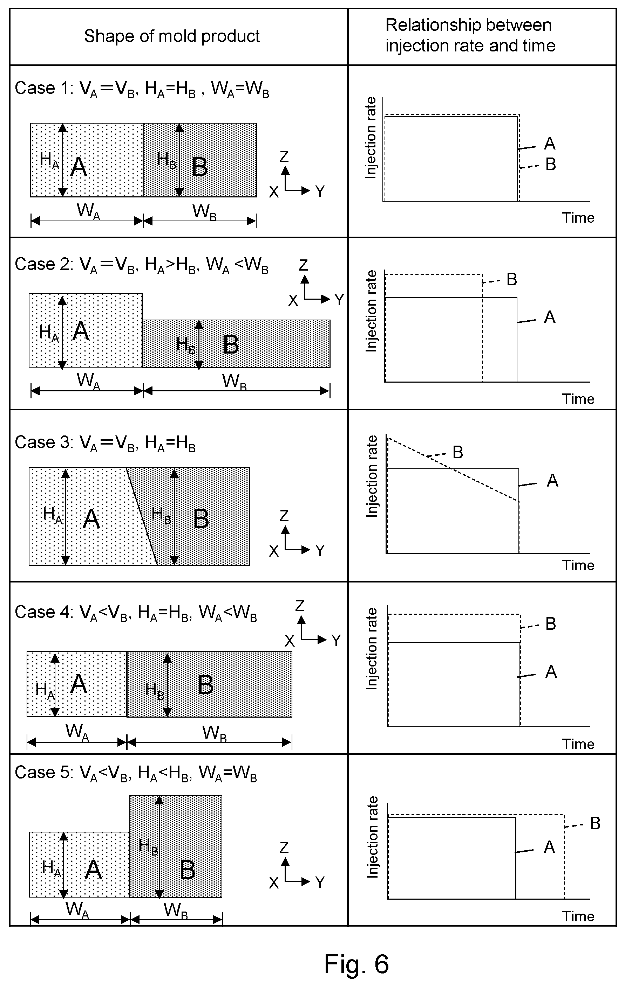

The shape and size of parts A and B of metal composite molded product 7 vary. Control unit 4 can control the two injection units 3A and 3B according to the configuration of metal composite molded product 7. Typical control methods are next described with reference to Fig. 6. In the drawing, V_{A} is the volume of part A, V_{B} is the volume of part B, W_{A} is the width of part A (dimension in the Y-direction), W_{B} is the width of part B (dimension in the Y-direction), H_{A} is the height of part A (dimension in the Z-direction), and H_{B} is the height of part B (dimension in the Z-direction).

In case 1 of Fig. 6, parts A and B have the same shape and dimensions. In this case, the injection conditions for injection units 3A and 3B are preferably the same. In other words, injections in injection units 3A and 3B begin at the same timing, the injections are executed at the same injection rate, and the injections end at the same timing. The injection rate is the amount of injection per unit time and can be obtained by S × V, where S is the cross-sectional area of the space in the cylinder in front of the screw and V is the injection speed of the molten metal in the injection direction X. The timings of the start of injection of metal A and metal B are preferably as close as possible. For example, if injection of metal A starts before injection of metal B, metal A will be injected into area B and consequently prevent the manufacture of a molded product with the intended shape.

Case 2 of Fig. 6 corresponds to Figs. 3 and 5. Here, parts A and B are assumed to have different shapes but the same volume (V_{A} = V_{B}). More specifically, the relations W_{A} < W_{B} and H_{A} > H_{B} are assumed, and the depths (the dimension in the X-direction) are assumed to be the same in parts A and B. In this case, if metal A and metal B are injected into parts A and B at the same injection rate, the height of the end portion of metal A in the Z-direction will gradually become higher than the height of the end portion of metal part B in the Z-direction. As a result, the end portion in the Z-direction of metal A will intrude into area B and prevent the manufacture of a molded product with the intended shape.

The control unit therefore controls the injection conditions of injection units 3A and 3B such that the end portion in the Z-direction of metal A and the end portion in the Z-directional of metal B remain the same height during injection or such that the end portion in the Z-direction of metal A and the end portion in the Z-direction of metal B rise at the same speed. Specifically, the timings of the start of injection of metal A and metal B are set the same and the injection rate of metal A is set lower than the injection rate of metal B. Since the depths are constant in this case, the injection rate of metal A : the injection rate of metal B is equal to W_{A} : W_{B}. Since the injection of metal A does not end when the injection of metal B ends, the timing of the completion of the injection of metal A is later than the timing of completion of the injection of metal B.

In case 3 of Fig. 6, the volumes of parts A and B are the same (V_{A} = V_{B}) but the injection rate of metal B is decreased over time. At first, the amount of metal B injected per unit time is greater than the amount of metal A injected per unit time, and a portion of metal B consequently flows around metal A. The amount of injection per unit time in part A subsequently becomes greater than the amount of injection per unit time in part B, and as a result, a portion of metal A flows around metal B. As a result, metal composite molded product 7 can be manufactured that has a sloping boundary line between part A and part B. Thus, changing the injection rate of at least one of the molten metals over time enables the manufacture of metal composite molded products 7 with various shapes having different boundaries.

In case 4 of Fig. 6, the volume of part B is greater than that of part A (V_{A} < V_{B}), but H_{A} = H_{B}, and the depths (the dimensions in the X-direction) are the same for parts A and B. In this case, setting the injection rate of injection unit 3A lower than the injection rate of injection unit 3B enables alignment of the height of the top end of metal A in the Z-direction with the height of the top end of metal B in the Z-direction. Since the depths are constant in this case, the injection rate of metal A : the injection rate of metal B is equal to W_{A} : W_{B}. The injections of metal A and metal B are completed at the same time.

In case 5 of Fig. 6, V_{A} < V_{B} and H_{A} < H_{B}, but W_{A} = W_{B}, and the depths (the dimensions in the X-direction) are the same for part A and part B. In this case, setting the injection rates of injection unit 3A and injection unit 3B the same can enables alignment the height of the top end of the metal A in the Z-direction with the height of the top end of metal B in the Z-direction. Since the injection of metal B is still incomplete when the injection of metal A is completed, the timing at which the injection of metal B is completed is later than the timing at which the filling of metal A is completed.

As can be seen from these examples, control unit 4 controls injection process S3 of all injection units 3A and 3B such that the injection processes overlap at least partially. Control unit 4 can also control a plurality of injection units 3A and 3B according to injection conditions that differ from each other. Specifically, control unit 4 can individually set at least the following injection parameters of each of individual injection units 3A and 3B:
- The timings at which the injections of materials from injection units 3A and 3B are completed;
- The injection volumes of materials injected from injection units 3A and 3B;
- The durations of injections of materials injected from injection units 3A and 3B; and
- The injection rates or injection speeds of materials injected from injection units 3A and 3B.

Although not described in the above examples, the duration of holding pressure of each of injection units 3A and 3B can be set individually as an injection parameter. The injection rate, injection speed, and other parameters are preferably individually controlled and set depending on such factors as the viscosity of the molten metal and the gate resistance.

In the present embodiment, a plurality of injection units 3A and 3B is used to inject multiple types of metals into the mold, and the lengths of, for example, runners 42A and 42B can be shortened. Light metals used in metal injection molding have a short solidification time and solidify in the mold within a short period of time, and the molten metal must therefore be injected into the mold at high speed. In the present embodiment, the molten metal fills cavity M3 in a short time after injection, and such problems as the solidification of molten metal midway through injection are consequently unlikely to occur.

The present invention is not limited to the embodiments described above. One of a plurality of injection units may have a different injection capacity than at least one of the others. For example, when producing metal composite molded product 7 according to cases 4 and 5 of Fig. 6, injection unit 3A may have a smaller capacity than injection unit 3B, whereby the cost of injection molding machine 3 can be reduced. The number of injection units is not limited to two but may be three or more. In addition, the materials may have different solid-phase ratios during injection.

While preferred embodiments of the invention have been shown and described in detail, it is to be understood that various changes and modifications can be made without departing from the intent or scope of the appended claims.

### Reference Number List

- 1: injection molding machine
- 2: mold-clamping unit
- 3A, 3B: injection unit
- 4: control unit
- M1: fixed mold
- M2: movable mold
- M3: cavity

## Claims

1. An injection molding machine, comprising:
a plurality of injection units;
one mold-clamping unit, and
a control unit for said plurality of injection units, wherein
said control unit controls said plurality of injection units according to injection conditions that differ from each other and effects control such that injection processes of all said injection units overlap at least partially.

2. The injection molding machine according to claim 1, wherein said control unit controls said plurality of injection units such that injection volumes of materials injected from said plurality of injection units are different from each other.

3. The injection molding machine according to claim 1 or 2, wherein said control unit controls said plurality of injection units such that durations of injections of materials injected from said plurality of injection units are different from each other.

4. The injection molding machine according to any one of claims 1 to 3, wherein said control unit controls said plurality of injection units such that injection rates or injection speeds of materials injected from said plurality of injection units are different from each other.

5. The injection molding machine according to any one of claims 1 to 4, wherein said control unit controls said plurality of injection units such that injection start timings of materials injected from said plurality of injection units coincide.

6. The injection molding machine according to any one of claims 1 to 5, wherein said control unit controls said plurality of injection units such that end timings of injections of materials injected from said plurality of injection units are different from each other.

7. The injection molding machine according to any one of claims 1 to 6, wherein said control unit controls said plurality of injection units such that durations of holding pressure are different from each other.

8. The injection molding machine according to any one of claims 1 to 7, wherein one of said plurality of injection units has a different injection capacity than at least one of the others.

9. The injection molding machine according to any one of claims 1 to 8, wherein materials injected from said plurality of injection units are different from each other.

10. A method for manufacturing a molded product made of multiple materials using an injection molding machine comprising a plurality of injection units, one mold-clamping unit and a control unit for said plurality of injection units injection units, said method comprising a step of:
injecting different materials from each of the plurality of injection units into a cavity in a mold,
wherein said control unit controls said plurality of injection units according to injection conditions that differ from each other and effects control such that injection processes of all said injection units overlap at least partially.

11. The method for manufacturing the molded product according to claim 10, wherein materials injected from said plurality of injection units are different from each other.

12. The method for manufacturing the molded product according to claim 10 or 11, wherein solid-phase ratios during injections of materials injected from said plurality of injection units are different from each other.
